# EUROPÄISCHE PATENTSCHRIFT

(11) **EP 1 068 668 B1**
(45) Veröffentlichungstag und Bekanntmachung des Hinweises auf die Patenterteilung: **05.10.2005**
(21) Anmeldenummer: 99950637.1
(22) Anmeldetag: 24.09.1999
(51) Int. Cl.: H03K 3/00

(54) **SCHALTUNGSANORDNUNG ZUM VERARBEITEN VON DATENSIGNALEN**
CIRCUIT FOR PROCESSING DATA SIGNALS
CIRCUIT POUR TRAITER DES SIGNAUX DE DONNEES

(30) Priorität: 30.09.1998 DE 19844929
(43) Veröffentlichungstag der Anmeldung: 17.01.2001
(73) Patentinhaber: Koninklijke Philips Electronics N.V., 5621 BA Eindhoven (NL); Philips Intellectual Property & Standards GmbH, 20099 Hamburg (DE)
(72) Erfinder: MALZAHN, Ralf, NL-5656 AA Eindhoven (NL)
(74) Vertreter: Peters, Carl Heinrich
(86) Internationale Anmeldenummer: PCT/EP1999/007452
(87) Internationale Veröffentlichungsnummer: WO 2000/019608

(56) Entgegenhaltungen:
- EP-A- 0 020 236
- EP-A- 0 089 596
- EP-A- 0 164 785
- EP-A- 0 390 452
- EP-A- 0 396 461
- EP-A- 0 658 995
- EP-A- 0 716 501
- WO-A-91/07015
- DE-A- 3 121 970
- DE-A- 3 324 820
- DE-A- 3 539 129
- DE-A- 3 623 263
- DE-A- 3 942 431
- GB-A- 2 062 915
- GB-A- 2 089 601
- GB-A- 2 209 908
- GB-A- 2 233 177
- US-A- 4 501 002
- US-A- 4 730 265
- US-A- 5 117 135
- US-A- 5 331 669
- US-A- 5 574 732
- US-A- 5 623 223
- PATENT ABSTRACTS OF JAPAN vol. 1995, no. 02, 31. März 1995 (1995-03-31) & JP 06 311153 A (NEC CORP;OTHERS: 01), 4. November 1994 (1994-11-04)
- PATENT ABSTRACTS OF JAPAN vol. 1995, no. 05, 30. Juni 1995 (1995-06-30) & JP 07 038535 A (DAIDO SIGNAL CO LTD), 7. Februar 1995 (1995-02-07)
- PATENT ABSTRACTS OF JAPAN vol. 1998, no. 02, 30. Januar 1998 (1998-01-30) & JP 09 284058 A (NEC CORP), 31. Oktober 1997 (1997-10-31)

## Beschreibung

Die Erfindung bezieht sich auf eine Schaltungsanordnung mit einer Stufe zum Verarbeiten von Datensignalen, die der Stufe in durch ein Taktsignal bestimmten Zeitintervallen mit vorgebbarer Sequenz zugeführt werden.

Derartige Schaltungsanordnungen werden in allen Arten von digitalen Schaltkreisen verwendet, die Daten verarbeiten. Insbesondere, wenn diese Schaltungsanordnungen oder ihre Elemente mit CMOS-Schaltkreisen aufgebaut sind, kann ihre Stromaufnahme stark reduziert werden, da derartige CMOS-Schaltkreise und damit aufgebaute logische Gatter nur dann Strom verbrauchen, wenn die an ihnen auftretenden Datensignale ihren Wert verändern. Somit hängt der Stromverbrauch einer derart aufgebauten Schaltungsanordnung von den Änderungen der Datensignale ab. Dadurch kann die Gefahr bestehen, daß aus dem zeitlichen Verlauf der Stromaufnahme ein Rückschluß auf die Änderungen der Daten und damit auf die Daten selbst möglich ist. Ein solcher Rückschluß kann aber insbesondere bei geheim zu haltenden Datensignalen nicht zugelassen werden.

Eine besondere Verschärfung dieses Problems tritt auch dann auf, wenn zur Einsparung von Strom Teile synchron betriebener, logischer Schaltungen nur bedingt getaktet werden, d.h. nur dann, wenn der entsprechende Schaltungsteil auch wirklich für die aktuelle Datensignalverarbeitung benutzt wird. Gerade dieser Versuch, so wenig Strom wie möglich zu verbrauchen, führt aber andererseits dazu, daß sich Abhängigkeiten des Stromverbrauchs von den Datensignalen besonders bemerkbar machen. Solche Schaltkreise zeigen deutliche Abhängigkeiten der elektrischen Leistungsaufnahme von den verarbeiteten Datensignalen.

Die Erfindung hat die Aufgabe, eine Schaltungsanordnung der eingangs genannten Art so auszubilden, daß die datensignalabhängige Leistungsaufnahme verschleiert wird.

Diese Aufgabe wird bei einer Schaltungsanordnung der gattungsgemäßen Art dadurch gelöst, daß in je einem Teil jedes der Zeitintervalle der Schaltungsanordnung anstelle der zu verarbeitenden Datensignale veränderte Datensignale zugeführt werden.

Gemäß der Erfindung werden somit der beschriebenen Schaltungsanordnung, bevor diese die Daten verarbeitet, die ihrer eigentlichen Zweckbestimmung entsprechen, andere - und zwar möglichst verschiedene - Daten zugeführt. Dadurch kann erreicht werden, daß die Anzahl der Schaltvorgänge in der Schaltungsanordnung in jedem der Zeitintervalle in etwa gleich groß ist, und zwar unabhängig davon, ob und wie stark sich die eigentlich zu verarbeitenden Datensignale ändern und welche Werte sie annehmen. Damit ergibt sich eine Leistungsaufnahme, die nicht mehr mit der Verarbeitung der eigentlichen Datensignale in Korrelation gesetzt werden kann.

Die Erfindung hat den Vorteil, daß dieselbe Schaltungsanordnung sowohl für eigentliche Aufgabe, d.h. für die eigentlich zu verarbeitenden Datensignale, als auch für die Erzeugung eines zusätzlichen Stromverbrauchs durch Bearbeitung von veränderten Datensignalen, die nur eine scheinbare Bedeutung haben, genutzt wird. Dies erfolgt in einer Art Zeitmultiplex in jedem der Zeitintervalle. Insbesondere wird also sequentiell hintereinander erst eine Scheinoperation ohne Bedeutung und danach erst die Operation mit den eigentlich zu verarbeitenden Datensignalen durchgeführt.

Werden die Zeitintervalle beispeilsweise durch ein Taktsignal vorgegeben, welches einen rechteckförmigen Verlauf aufweist, können die veränderten Datensignale in jeweils einer der Halbperioden des Taktsignals und die eigentlich zu verarbeitenden Datensignale in jeweils der anderen Halbperiode des Taktsignals verarbeitet werden. Die veränderten Datensignale können aber auch in Zeitabschnitten, die kurz gegenüber der Periodendauer des Taktsignals sind und im Bereich beispielsweise der Flanken des Taktsignals liegen, zugeführt und bearbeitet werden, wohingegen während der übrigen Zeitabschnitte der Perioden des Taktsignals die eigentlich zu verarbeitenden Datensignale zugeführt werden.

Durch die Erfindung wird mit geringem Schaltungsaufwand eine sehr wirksame Verschleierung erreicht. Diese wird durch einen etwas erhöhten Stromverbrauch erkauft.

Die veränderten Datensignale werden aus den eigentlich zu verarbeitenden Datensignalen vorzugsweise durch eine vom Taktsignal gesteuerte Datenveränderungsanordnung erzeugt, die in einfacher Weise in die Pfade für die Datensignale eingefügt werden kann. Vorzugsweise kann diese Datenveränderungsanordnung eine Exclusiv-Oder-Schaltung oder eine Multiplexeranordnung umfassen. In einer vorzugsweisen Ausgestaltung umfaßt die erfindungsgemäße Schaltungsanordnung in der Stufe zum Verarbeiten der Datensignale eine kombinatorische Logik. Dieser kann die Datenveränderungsanordnung vorgeschaltet sein. Aus einer ersten Speichereinrichtung können die zu verarbeitenden Datensignale über die Datenveränderungsanordnung der kombinatorischen Logik zugeführt werden, um von dieser einer zweiten Speichereinrichtung zur Speicherung der in der kombinatorischen Logik gewonnenen Datensignale vorzunehmen.

Besonders vorteilhaft ist eine Anwendung der erfindungsgemäßen Schaltungsanordnung im Zusammenhang mit CMOS-Schaltkreisen. Grundsätzlich ist die Anwendung aber nicht auf derartige Schaltungstechniken begrenzt.

Die erzielte Verschleierung entsteht insbesondere dadurch, daß die kombinatorische Logik in jedem Zeitintervall neu Datensignale bearbeiten muß, d.h. daß sich diese Datensignale durch den Einfluß der Datenveränderungsanordnung ändern. Damit können starke Unterschiede in der Leistungsaufnahme der Schaltungsanordnung für verschiedene Zeitintervalle ausgeschlossen werden, die beispielsweise dann entstehen könnten, wenn sich in den zu verarbeitenden Datensignalen nur sehr wenige Änderungen befinden.

Ein Ausführungsbeispiel der Erfindung ist in der Zeichnung dargestellt und wird im nachfolgenden näher beschrieben. Es zeigen
Fig. 1 eine blockschematische Darstellung eines Ausführungsbeispiels,
Fig. 2 und 3 Ausführungbeispiele für die Datenveränderungsanordnung des Ausführungsbeispiels nach Fig. 1 und
Fig. 4 einige Signalverläufe der Schaltungsanordnung nach Fig. 1.

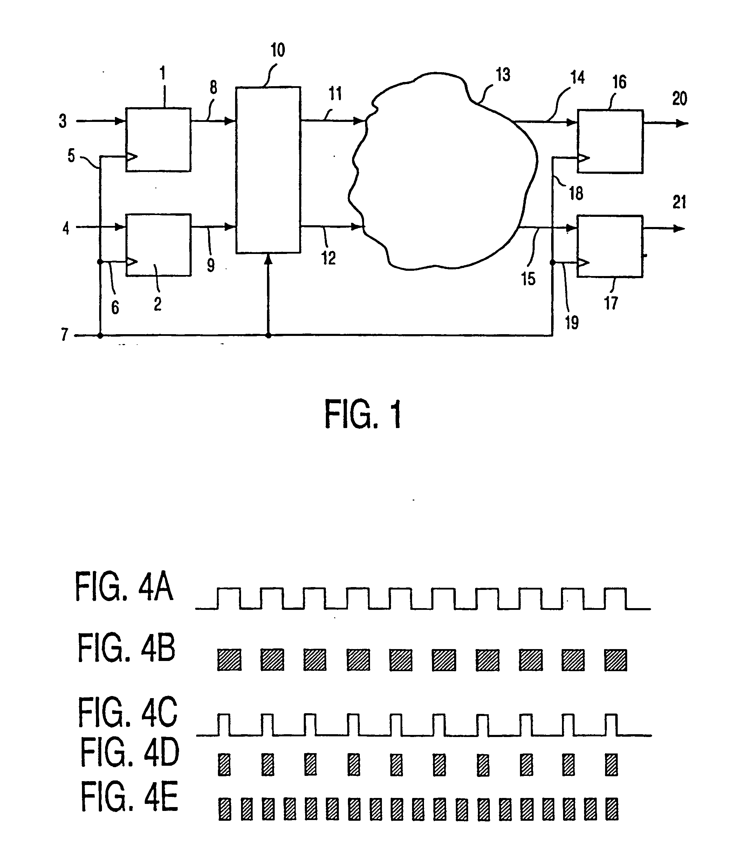

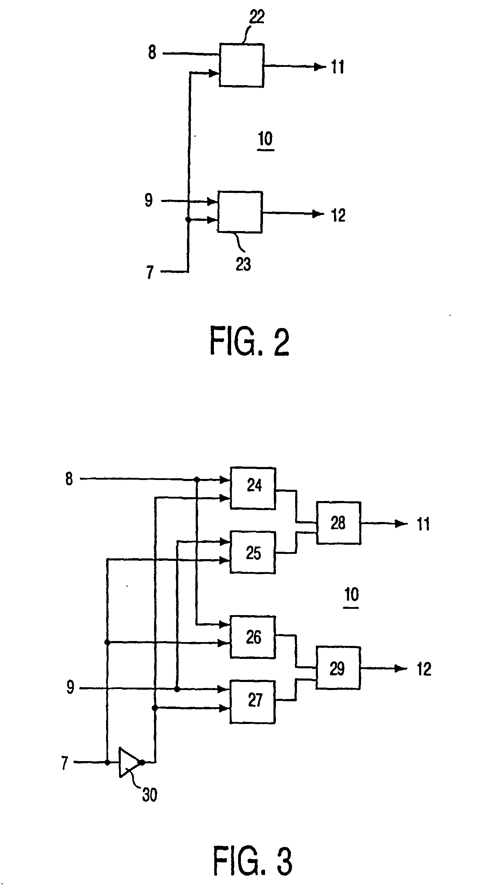

Die Schaltungsanordnung nach Fig. 1 umfaßt eine erste Speichereinrichtung, bestehend aus zwei D-Flipflops 1, 2, denen an Dateneingängen 3, 4 die zu verarbeitenden Datensignale zugeführt werden. Über Takteirigänge 5, 6 wird von einem Taktsignalanschluß 7 ein Taktsignal zugeführt. Die in der ersten Speichereinrichtung 1, 2 gespeicherten, zu verarbeitenden Datensignale werden über Datenausgänge 8, 9 abgegeben.

Von den Datenausgängen 8, 9 gelangen die zu verarbeitenden Datensignale über eine Datenveränderungsanordnung 10 und Leitungen 11 bzw. 12 auf eine kombinatorische Logik 13 und von deren Ausgängen 14, 15 auf eine zweite Speichereinrichtung, die zwei D-Flipflops 16, 17 umfaßt. Auch die D-Flipflops 16, 17 werden über Takteingänge 18, 19 aus dem Taktsignalanschluß 7 mit dem Taktsignal gespeist. Sie geben die gespeicherten Datensignale über Datenausgänge 20 bzw. 21 ab.

Fig. 2 zeigt ein erstes Ausführungsbeispiel für die Ausbildung der Datenveränderungsanordnung 10. Dieses umfaßt zwischen je einem der Datenausgänge 8 bzw. 9 und je einer der Leitungen 11 bzw. 12 ein Exclusiv-Oder-Gatter 22 bzw. 23. Über jedes der Exclusiv-Oder-Gatter 22, 23 wird eines der Datensignale auf dem Weg von der ersten Speichereinrichtung 1, 2 zur kombinatorischen Logik 13 geleitet. Je ein zweiter Eingang der Exclusiv-Oder-Gatter 22, 23 ist mit dem Taktsignalanschluß 7. Dadurch werden mit Hilfe des Taktsignals in jeder Halbperiode die veränderten Datensignale erzeugt. Die Datensignale auf den Leitungen 11, 12 und damit auf den Ausgängen 14, 15 der kombinatorischen Logik 13 werden somit zu Beginn einer jeden Taktsignalperiode zunächst verändert, und erst im zweiten Teil der Taktsignalperiode werden die eigentlich zu verarbeitenden Datensignale übertragen. Insbesondere ist die Ausführung gemäß Fig. 2 so ausgebildet, daß die Exclusiv-Oder-Gatter 22, 23 die über die Datenausgänge 8, 9 der ersten Speichereinrichtung 1, 2 zugeführten Datensignale bei hohem Pegel am Taktsignalanschluß 7 invertieren und bei niedrigem Pegel am Taktsignalanschluß 7 unverändert durchlassen.

In einem zweiten Ausführungsbeispiel umfaßt die Datenveränderungsanordnung 10 vier Und-Gatter 24, 25, 26 bzw. 27, zwei Oder-Gatter 28 bzw. 29 und einen Inverter 30. Je ein erster Eingang des ersten und des dritten Und-Gatters 24, 26 ist mit dem Datenausgang 8 verbunden. Je ein erster Eingang des zweiten und des vierten Und-Gatters 25, 27 ist mit dem Datenausgang 9 verbunden. Je ein zweiter Eingang des ersten und des vierten Und-Gatters 24, 27 ist mit dem Ausgang des Inverters 30 verbunden, und der Eingang des Inverters 30 ist mit dem Taktsignalanschluß 7 und mit je einem zweiten Eingang des zweiten und des dritten Und-Gatters 25, 26 verbunden. Die Ausgänge des ersten und des zweiten Und-Gatters 24, 25 sind mit je einem Eingang des ersten Oder-Gatters 28 verbunden, dessen Ausgang an die Leitung 11 geführt ist. Entsprechend sind die Ausgänge des dritten und des vierten Und-Gatters 26, 27 mit Eingängen des zweiten Oder-Gatters 29 verbunden, dessen Ausgang mit der Leitung 12 verbunden ist. Durch die so gebildete Multiplexeranordnung werden die Datensignale von den Datenausgängen 8, 9 bei hohem Pegel am Taktsignalanschluß 7 permutiert.

Fig. 4 zeigt einige beispielhafte Signalverläufe zur Erläuterung der Funktionsweise der Schaltungsanordnungen nach den Fig. 1 bis 3. In Fig. 4a) ist zunächst ein rechteckförmiges Taktsignal mit einem Tastverhältnis von 1 dargestellt. Fig. 4b) zeigt durch Schraffur die Teile der Taktsignalperioden, während derer durch Datenveränderungsanordnungen gemäß den Fig. 2 und 3 eine Permutation bzw. Veränderung der Datensignale vorgenommen wird. Hierbei beginnt jede Taktsignalperiode mit einer ansteigenden Flanke des Taktsignals gemäß Fig. 4a).

Fig. 4c) zeigt ein Taktsignal mit einem Tastverhältnis, welches kleiner als 1 ist. Beispielsweise kann dieses Taktsignal aus dem Taktsignal gemäß Fig. 4a) abgeleitet werden. Wird mit einem solchen Taktsignal eine Datenveränderungsanordnung gemäß den Fig. 2 oder 3 angesteuert, ergibt sich eine Erzeugung der veränderten Datensignale in den in der Fig. 4d) schraffiert dargestellten Teilen der Taktsignalperioden. Diese Teile sind gegenüber denjenigen nach Fig. 4b) verkürzt, wodurch beispielsweise der kombinatorischen Logik 13 ein größerer Zeitraum innerhalb jeder Taktsignalperiode für die Verarbeitung der eigentlich zu bearbeitenden Datensignale eingeräumt werden kann.

In einem dritten Beispiel kann zu jeder Flanke des Taktsignals gemäß Fig. 4a) ein kurzer Zeitraum erzeugt werden, innerhalb dessen die Datensignale verändert werden. Dies ist in Fig. 4e) symbolisch dargestellt.

## Patentansprüche

1. Schaltungsanordnung mit einer Stufe zum Verarbeiten von Datensignalen, die der Stufe in durch ein Taktsignal bestimmten Zeitintervallen mit vorgebbarer Sequenz zugeführt werden, **dadurch gekennzeichnet,**
**daß** in je einem Teil jedes der Zeitintervalle der Schaltungsanordnung anstelle der zu verarbeitenden Datensignale veränderte Datensignale zugeführt werden.

2. Schaltungsanordnung nach Anspruch 1, **gekennzeichnet durch**
eine vom Taktsignal gesteuerte Datenveränderungsanordnung zum Erzeugen der veränderten Datensignale aus den zugeführten Datensignalen.

3. Schaltungsanordnung nach Anspruch 2, **dadurch gekennzeichnet,**
**daß** die Datenveränderungsanordnung eine Exclusiv-Oder-Schaltung umfaßt.

4. Schaltungsanordnung nach Anspruch 2, **dadurch gekennzeichnet,**
**daß** die Datenveränderungsanordnung eine Multiplexeranordnung umfaßt.

5. Schaltungsanordnung nach einem der vorhergehenden Ansprüche, **dadurch gekennzeichnet,**
**daß** die Stufe zum Verarbeiten von Datensignalen eine kombinatorische Logik umfaßt.

6. Schaltungsanordnung nach einem der vorhergehenden Ansprüche, **gekennzeichnet durch**
eine erste Speichereinrichtung, von der die Datensignale über die Datenveränderungsanordnung der kombinatorischen Logik zugeführt werden, sowie eine zweite Speichereinrichtung zum Speichern von **durch** die kombinatorische Logik abgegebenen Datensignalen.

7. Schaltungsanordnung nach einem der vorhergehenden Ansprüche, **dadurch gekennzeichnet,**
**daß** die Elemente der Schaltungsanordnung mit CMOS-Schaltkreisen aufgebaut sind.

## Claims

1. A circuit arrangement which includes a stage for the processing of data signals which are applied to the stage in a selectable sequence during time intervals which are defined by a clock signal, **characterized in that** in a respective part of each time interval the circuit arrangement is supplied with modified data signals instead of the data signals to be processed.

2. A circuit arrangement as claimed in Claim 1, **characterized in that**
it includes a data modification device which is controlled by the clock signal and serves to generate the modified data signals from the supplied data signals.

3. A circuit arrangement as claimed in Claim 2, **characterized in that**
the data modification device includes an exclusive-OR circuit.

4. A circuit arrangement as claimed in Claim 2, **characterized in that**
the data modification device includes a multiplexer device.

5. A circuit arrangement as claimed in one of the preceding Claims, **characterized in that** the stage for the processing of data signals includes a combinatory logic circuit.

6. A circuit arrangement as claimed in one of the preceding Claims, **characterized in that** it includes a first storage device wherefrom the data signals are applied, via the data modification device, to the combinatory logic circuit, as well as a second storage device for the storage of data signals output by the combinatory logic circuit.

7. A circuit arrangement as claimed in one of the preceding Claims, **characterized in that** the elements of the circuit arrangement are constructed by means of CMOS circuits.

## Revendications

1. Circuit avec un étage pour le traitement de signaux de données qui sont amenés à l'étage dans des intervalles de temps déterminés par un signal de rythme avec une séquence à déterminer préalablement, **caractérisé en ce**
**que** des signaux de données modifiés sont amenés à la place des signaux de données à traiter dans, à chaque fois, une partie de chacun des intervalles de temps du circuit.

2. Circuit selon la revendication 1, **caractérisé par** un dispositif de modification des données commandé par le signal de rythme en vue de la production des signaux de données modifiés à partir des signaux de données amenés.

3. Circuit selon la revendication 2, **caractérisé en ce que** le dispositif de modification des données comprend un circuit Ou exclusif.

4. Circuit selon la revendication 2, **caractérisé en ce que** le dispositif de modification des données comprend un dispositif de multiplexage.

5. Circuit selon l'une des revendications précédentes, **caractérisé en ce que** l'étage pour le traitement des signaux de données comprend une logique combinatoire.

6. Circuit selon l'une des revendications précédentes,
**caractérisé par**
un premier dispositif de mémoire par lequel les signaux de données sont amenés par l'intermédiaire du dispositif de modification des données à la logique combinatoire ainsi qu'un deuxième dispositif de mémoire pour l'enregistrement de signaux de données délivrés par la logique combinatoire.

7. Circuit selon l'une des revendications précédentes, **caractérisé en ce**
**que** les éléments du circuit sont conçus avec des circuits CMOS.
